# FASCICULE DE BREVET EUROPEEN

(11) **EP 1 036 729 B1**
(45) Date de publication et mention de la délivrance du brevet: **06.10.2004**
(21) Numéro de dépôt: 00440083.4
(22) Date de dépôt: 17.03.2000
(51) Int. Cl.: B62D 25/08, B62D 29/00

(54) **Paroi de face avant d'un véhicule renforcée par le surmoulage d'au moins un élément de rigidification**
Fahrzeugfrontteil verstärkt durch Umspritzung mindestens eines Versteifungselements
Front body panel of a vehicle reinforced by overmoulding of at least one stiffening element

(30) Priorité: 18.03.1999 FR 9903490
(43) Date de publication de la demande: 20.09.2000
(73) Titulaire: REHAU S.A., 57340 Morhange (FR)
(72) Inventeur: Reb, Guy, 57990 Hundling (FR)
(74) Mandataire: Metz, Paul

(56) Documents cités:
- EP-A- 0 658 470
- DE-A- 19 813 162
- US-A- 5 575 526
- US-A- 5 658 041

## Description

La présente invention concerne le maintien et la rigidification d'un panneau de structure en matière plastique renforcé par un ou plusieurs éléments rectilignes sur lesquels au moins une zone du panneau de structure est surmoulée. Ce panneau est principalement destiné à être utilisé comme support d'extrémité avant d'un véhicule sous le capot moteur.

DE 198 13 162 A montre un ensemble selon le préambule de la revendication 1.

Les véhicules routiers comportent de nombreux organes, dispositifs et éléments techniques localisés à l'avant et dissimulés sous le capot moteur. Ceux-ci sont logés dans l'espace d'extrémité de la carrosserie délimité sur les faces latérales par les passages de roues avant, sur la face supérieure par le capot du moteur, espace situé à l'avant au niveau d'une pièce support dénommée paroi de face avant de véhicule. Cette paroi de face avant permet la fixation de divers organes et dispositifs ainsi que certains éléments techniques internes à la carrosserie tels que, par exemple, le radiateur, le condenseur du système de climatisation s'il existe, les entrées d'air pour la ventilation de l'habitacle et du moteur. La paroi de face avant maintient également des éléments externes à la carrosserie tels que, par exemple, des éléments esthétiques comme la calandre ou techniques comme les phares.

La paroi de face avant d'un véhicule est, de façon classique, constituée d'un panneau de métal découpé de manière appropriée selon des ouvertures pour supporter par fixation les éléments techniques et ornementaux et permettre la circulation de l'air.

Ces panneaux donnent généralement satisfaction. Cependant, une pièce entièrement réalisée en métal est lourde et chère. Le coût de fabrication de cette pièce est encore augmenté par l'étape de découpe des ouvertures et de poinçonnage des orifices adaptés à la fixation des différents éléments.

Le but de l'invention est de fournir un ensemble composite formé d'un panneau de structure, servant de paroi de face avant de véhicule sous capot moteur, réalisé en matière plastique et d'un élément de rigidification et de liaison solidaire à ce panneau, par exemple, au bord supérieur de celui-ci.

On obtient ainsi un ensemble rigide et léger immobilisé par son bord supérieur. Sa fabrication est simple et son coût fortement réduit. En outre, l'étape supplémentaire de découpe est évitée, ce qui diminue encore le prix de la pièce. En effet, le panneau est réalisé, par exemple, par le procédé de moulage par injection. Les découpes nécessaires sont ménagées, simultanément à la fabrication du panneau, par une structure de moule adaptée.

La paroi de face avant d'un véhicule est, en effet, soumise à de fortes sollicitations. Elle doit supporter un poids important et résister à des efforts dynamiques verticaux et de torsion non négligeables lors du roulage. Cette pièce de structure doit donc, non seulement être légère et économique, mais en plus, être suffisamment résistante pour supporter ces contraintes. Un simple panneau en matière plastique ne présente pas une rigidité suffisante pour pouvoir être utilisé tel quel pour cette application.

L'invention apporte une solution avantageuse à ce problème technique en proposant de rigidifier le panneau en matière plastique, au moins le long d'une zone supérieure de bordure, en le solidarisant à un élément rectiligne, par exemple un tube de rigidification, servant également de traverse d'extrémité avant de carrosserie.

Le but principal de l'invention est de fournir des pièces légères, par exemple des panneaux de grande dimension en matière plastique, présentant de bonnes caractéristiques de rigidité lorsqu'elles sont soumises aux contraintes de traction / compression de flambage et de torsion.

Pour atteindre cet objectif, l'invention prévoit un ensemble selon la revendication 1. En particulier, les panneaux en matière plastique sont renforcés sur leur partie supérieure et en particulier sur leur bord supérieur par une ou plusieurs structures tubulaires en métal, ou par tout autre élément rectiligne en matériau suffisamment rigide. Ces structures de rigidification de formes appropriées sont disposées dans les directions nécessaires, aux endroits de sollicitation importante.

Selon une caractéristique essentielle de l'invention, les panneaux en matière plastique sont solidarisés aux éléments rectilignes de rigidification, par exemple aux tubes métalliques, par surmoulage total ou partiel sur toute leur longueur ou de façon localisée.

Les tubes préformés sont mis en place dans le moule d'injection qui possède une cavité appropriée à la forme des tubes. Les tubes sont maintenus en position à l'aide de pinces ou par aimantation. Le moule est ensuite refermé et l'injection se déroule de façon classique, connue de l'homme du métier sous la dénomination de surmoulage. Le polymère ou la résine plastique entoure les tubes aux endroits désirés, uniformément ou non suivant que le surmoulage est total ou partiel.

Selon une autre caractéristique de l'invention, la liaison de solidarisation entre les structures tubulaires métalliques et la matière plastique peut-être améliorée par des traitements mécaniques effectués sur les tubes, par exemple, par moletage, par la création de déformations localisées, par la réalisation de méplats ou de formes géométriques servant à l'ancrage dans le polymère ou la résine plastique et rendant impossible tout pivotement des tubes par rapport à la matière plastique. Une primérisation des tubes est également envisageable.

En certains endroits l'épaisseur du panneau en matière plastique peut être plus faible, ce qui peut se traduire par une couche de polymère insuffisante pour enrober entièrement les tubes métalliques. Ces derniers peuvent alors, par exemple, subir un usinage de façon à être aplatis sur la portion correspondante de leur longueur. On peut également leur rapporter des segments de tôle, de forme appropriée, prévus pour être logés dans les zones à épaisseur réduite. Ces morceaux de tôles peuvent être rapportés aux tubes par soudage, par simple accrochage à l'aide de crochets dans les embrèvements des tubes, ou par tout autre moyen envisageable. Pour améliorer l'adhérence du matériau plastique et pour augmenter les efforts de cisaillement transmissibles, la surface de ces segments de tôle peut en outre être travaillée par déformation en emboutissage, afin de la rendre structurée ou rugueuse. Les segments de tôle rapportés, comme les tubes, peuvent également être pourvus de trous permettant la réception de moyens d'accrochage et de serrage supplémentaires.

On peut envisager d'utiliser, pour la fabrication de ces panneaux surmoulés sur au moins un tube, des techniques de mise en forme des matériaux plastiques différentes de celle de l'injection, sans sortir du cadre de l'invention. Il peut s'agir, par exemple, des procédés de compression dits GMT et TRE, ou de moussage polyuréthane dits RIM.

De plus, tous les polymères et les résines, chargés ou non, compatibles avec les techniques de mise en forme des plastiques, peuvent être employés dans le cadre de l'ensemble renforcé selon l'invention.

Grâce à l'invention, on peut fabriquer une paroi rigidifiée de face avant de véhicule sous capot moteur en matière plastique. Cette pièce est légère et de fabrication simple et économique. Grâce au surmoulage sur une traverse métallique dans sa partie supérieure, le panneau possède une rigidité suffisante pour résister au poids et aux contraintes de flambage et de torsion que doit supporter une telle pièce. Elle peut être adaptée à tout type de véhicules automobiles et répond parfaitement aux problèmes techniques évoqués précédemment.

La paroi rigidifiée selon l'invention peut être appliquée à toute sorte de pièces en matière plastique et ne se limite pas aux seules parois de face avant de véhicule. Les applications de ces panneaux sont nombreuses dans le domaine de l'automobile et des véhicules, notamment, par exemple, pour des panneaux de porte, supports de pare-chocs ou bouclier, parois de face avant de véhicule sous capot moteur ou parois de face arrière. L'invention peut évidemment être utilisée dans d'autres domaines techniques, notamment, par exemple, pour la fabrication de porte à structure renforcée, de châssis renforcé pour machine de bureautique, ou plus généralement de toute pièce renforcée de grande dimension en matière plastique.

D'autres caractéristiques et avantages de l'invention apparaîtront à la lecture de la description détaillée qui va suivre, description faite en référence aux dessins annexés, dans lesquels :
- la figure 1 est une vue de face d'une paroi de face avant de véhicule sous capot moteur selon l'invention;
- la figure 2 est une vue en plan, d'une moitié de paroi de face avant de véhicule sous capot moteur;
- la figure 3 est une vue de détail en coupe, selon la ligne de coupe III-III de la figure 1, d'un tube de renfort dans le cas d'un surmoulage total;
- la figure 4 est une vue de détail en coupe, selon la ligne de coupe IV-IV de la figure 1, d'un tube de renfort dans le cas d'un surmoulage partiel;
- la figure 5 est une vue de détail en coupe d'une section du tube de renfort partiellement surmoulée sur laquelle un écrou est rapporté;
- la figure 6 est une vue de détail en coupe d'une section du tube de renfort perforée et ne comportant pas de surmoulage;
- la figure 7 est une vue de détail en coupe, selon la ligne de coupe VII-VII de la figure 1, d'une section du tube de renfort partiellement aplatie;
- la figure 8 est une vue de détail en coupe d'une section du tube de renfort complètement aplatie;
- la figure 9 est une vue de face d'un détail de l'extrémité du tube prolongée par un segment de tôle servant à la fixation de la paroi de face avant;
- la figure 10 est une vue de dessus d'un détail de l'extrémité du tube prolongée par un segment de tôle servant à la fixation de la paroi de face avant;
- la figure 11 est une vue schématique de dessus d'un autre mode de réalisation d'une paroi de face avant de véhicule sous capot moteur selon l'invention;
- la figure 12 est une vue schématique de dessus d'encore un autre mode de réalisation d'une paroi de face avant de véhicule sous capot moteur selon l'invention;
- la figure 13 est une vue de face d'un autre mode de réalisation d'une paroi de face avant de véhicule selon l'invention comportant deux traverses tubulaires de renfort;
- la figure 14 est une vue de détail d'un exemple d'éléments supplémentaires de maintien pouvant être intégrés à la paroi de face avant de véhicule sous capot moteur selon l'invention.

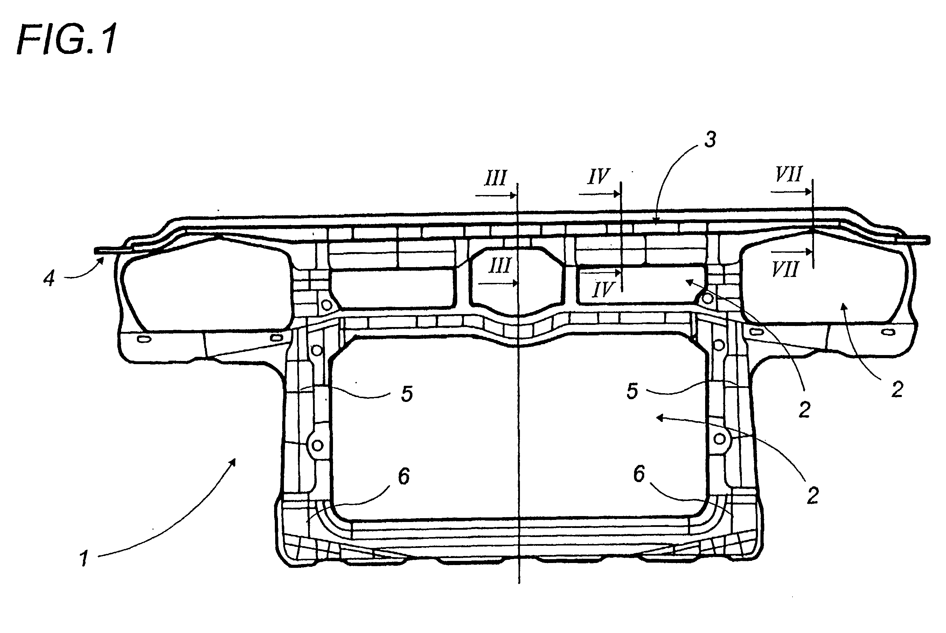

La paroi de face avant de véhicule sous capot moteur selon l'invention va maintenant être décrite en faisant référence aux figures 1 à 14. Les éléments équivalents du dispositif porteront les mêmes repères numériques dans les différentes figures.

La figure 1 représente une paroi 1 de face avant de véhicule sous capot moteur. Cette paroi 1 est réalisée en matière plastique, par exemple, selon le procédé de moulage par injection. Elle est de forme générale en T adaptée à la forme de la partie avant de la carrosserie du véhicule et possède de nombreuses ouvertures techniques telles que 2 constituant des logements ou des passages pour la réception d'éléments techniques et esthétiques. Les ouvertures techniques 2, dont le nombre, la forme et les dimensions sont adaptés à chaque modèle de véhicule, permettent la fixation des organes, des dispositifs et d'éléments techniques internes tels que le radiateur et éventuellement le condenseur du système de climatisation, ainsi que celle d'éléments externes : optiques et calandre. Des passages sont également ménagés dans cette pièce afin de réaliser une ou des entrées d'air nécessaires à la ventilation de l'habitacle et du moteur. La paroi 1 de face avant est ainsi ouverte sur une grande partie de sa surface, ce qui a pour inconvénient de réduire considérablement sa résistance dans son plan propre et selon une direction perpendiculaire.

Pour augmenter la rigidité, on a renforcé selon l'invention le bord supérieur de la paroi de face avant 1 par une traverse 3 par exemple métallique de préférence de forme générale tubulaire. Cette traverse 3 est située le long de l'extrémité supérieure de la paroi de face avant 1 et s'étend sur toute sa longueur. La solidarisation entre ces deux éléments est réalisée par un surmoulage de la bordure de la paroi de face avant en matière plastique sur le corps de la traverse tubulaire 3. Cette traverse tubulaire 3 est prolongée à ses extrémités par des segments 4 de tôle percés ou crevés permettant la fixation, lorsqu'elle est souhaitée, de la paroi 1 de face avant aux ailes avant du véhicule.

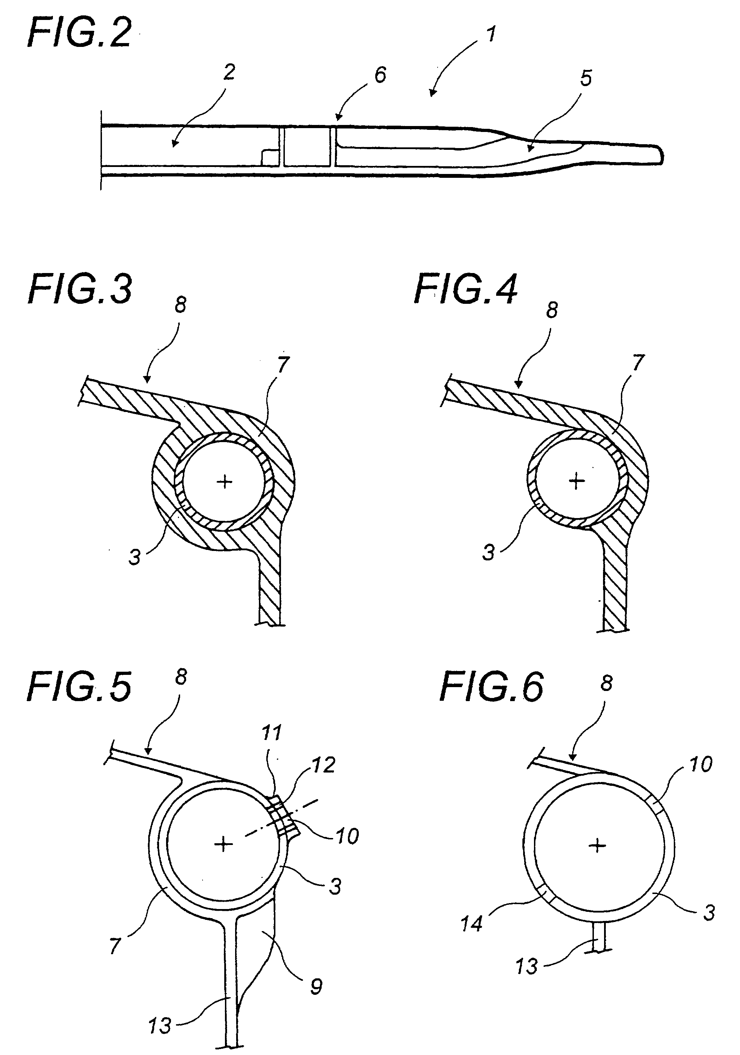

Bien que la traverse tubulaire 3 constitue le moyen essentiel de renforcement, la paroi 1 de face avant de véhicule peut, en outre, comporter des nervures 5 et 6 de rigidification en matière plastique, sous la forme de plans droits réalisant un véritable caissonnage de structure. Ces nervures, représentées sur les figures 1 et 2, peuvent s'étendre horizontalement pour la nervure 5, ou verticalement pour la nervure 6 autour des ouvertures techniques 2 de logement.

La traverse tubulaire métallique 3 est intimement liée à la bordure supérieure de la paroi de face avant 1 grâce à un procédé de surmoulage de la matière plastique constituant le panneau. Au cours de ce procédé, le tube 3 préformé est mis en place dans un moule d'injection, possédant une cavité appropriée à la forme du tube 3 et des ouvertures techniques 2. Le tube peut, par exemple, être maintenu en position par des pinces ou par aimantation. Le moule est ensuite refermé et l'injection se déroule de façon classique, connue de l'homme du métier. Le polymère ou la résine plastique entoure le tube 3 aux endroits désirés. Le surmoulage peut être réalisé de différentes façons : il peut être effectué sur toute la longueur du tube 3 ou seulement sur des portions localisées. Il peut être complet, le polymère enrobant entièrement le tube 3, ou partiel, une partie seulement du périmètre du tube 3 étant en contact avec le polymère. Le surmoulage peut éventuellement ne pas être identique sur toute la longueur de la traverse tubulaire 3.

Les figures 3 à 8 illustrent ces différents cas de surmoulage.

La section de la traverse métallique tubulaire 3 représentée sur la figure 3 est entourée sur toute sa périphérie d'une couche 7 de polymère assurant une liaison parfaite entre le tube 3 et la partie plastique de la paroi de face avant 1. Le bord supérieur 8 en matière plastique constitue la partie de la paroi de face avant 1 visible par l'utilisateur du véhicule lors de l'ouverture du capot. Il est donc conçu et dessiné pour obtenir une forme esthétique et technique d'une grande qualité dans la tendance actuelle des volumes sous capot moteur. A cet effet, il peut, par exemple, être grainé ou teinté.

La seconde possibilité est un surmoulage partiel, tel qu'il est représenté sur la figure 4. La couche 7 de polymère, réalisant la liaison avec le tube 3, n'est en contact qu'avec une portion de la périphérie du tube, environ la moitié de la périphérie dans le mode de réalisation représenté. Le surmoulage partiel permet de réduire le volume de polymère ou de résine plastique, ainsi que le nombre de calories à extraire pour la solidification de la résine moulée pour réaliser cette fixation, tout en diminuant le temps de cycle du procédé d'injection.

En outre, le surmoulage partiel permet, comme on le voit sur la figure 5, de percer ou de crever dans la portion du tube 3 qui n'est pas en contact avec le polymère, des trous 10 de forme générale circulaire. On peut réaliser également cette fonction sous forme de crevés remplaçant les trous 10. Des écrous 11 sont rapportés sur ces trous par exemple par soudage, par brasage ou par décharge de condensateur. Les trous 10 et les écrous 11 possèdent un filetage intérieur 12 permettant la réception d'un nombre adéquat de vis pour réaliser la fixation de l'unité de fermeture et de verrouillage du capot. Des vis rapportées et fixées par exemple par soudage ou décharge peuvent également permettre la fixation de l'unité de capot. Une nervure en matière plastique 9 coopère avec la traverse 3 afin de renforcer la rigidité de la structure représentée à la figure 5.

Comme illustré par la figure 6, le tube peut sur une certaine longueur ne pas être surmoulé. Il n'est alors en contact avec le polymère ou la résine que par les bords plastiques supérieur 8 et inférieur 13. On peut ainsi percer un ou plusieurs groupes constitués de deux trous 10 et 14, de forme générale circulaire, diamétralement opposés et situés en regard l'un de l'autre. Ces trous 10 et 14 permettent la fixation d'éléments rapportés à l'aide par exemple de boulons, ce qui évite la mise en place onéreuse d'écrous. Le coût de réalisation du tube 3 est de ce fait amoindri.

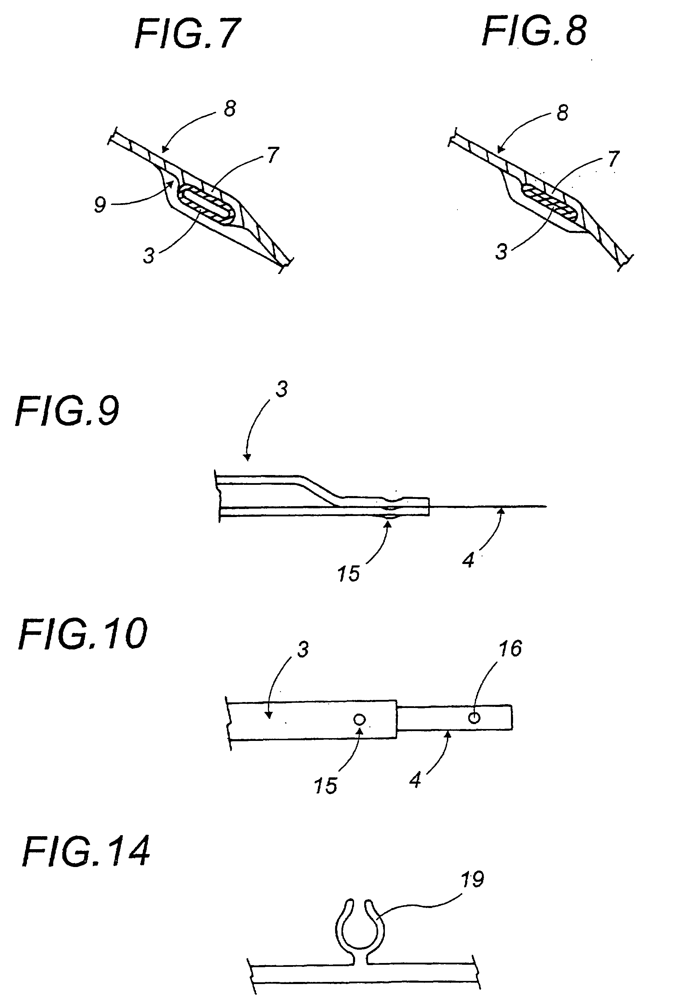

Certains accessoires techniques peuvent être localisés tout près de la partie supérieure de la paroi 1 de face avant de véhicule ainsi que de la traverse tubulaire 3. Dans ce cas, il est parfois nécessaire de réduire l'épaisseur transversale de la paroi de face avant 1 au niveau de la traverse métallique 3. On peut ainsi être amené à usiner le tube 3 pour l'aplatir, sur toute sa longueur ou localement, avant de réaliser le surmoulage. La figure 7 illustre un mode de réalisation où le cylindre est partiellement aplati présentant une forme de section en oblong. On réalise ensuite le surmoulage comme précédemment. Il s'agit, dans ce mode de réalisation, d'un surmoulage partiel complété par une nervure 9 de renfort. L'aplatissement permet également un meilleur ancrage du tube métallique 3 dans le polymère ou la résine plastique, toute rotation du tube dans la pièce plastique étant rendue impossible.

Dans un cas extrême de proximité d'accessoire, le tube peut être aplati intégralement, comme représenté sur la figure 8, et surmoulé entièrement ou uniquement sur une face. Le tube peut même être localement remplacé par un segment plat de tôle.

Les figures 9 et 10 montrent de façon plus détaillée l'une des extrémités de la traverse métallique tubulaire 3 de la figure 1, ses deux extrémités étant semblables. Le segment 4 de tôle est logé à l'extrémité du tube 3. Il est lié au tube par un poinçonnage 15 ou une déformation en cuvette des deux éléments, le nombre d'enfoncement étant adapté aux efforts à transmettre. Le segment 4 de tôle permet ensuite la fixation de la traverse tubulaire supportant la paroi 1 de face avant à l'une des ailes avant de la carrosserie, à l'aide d'un moyen de fixation rapporté sur le trou 16 du segment 4 de tôle.

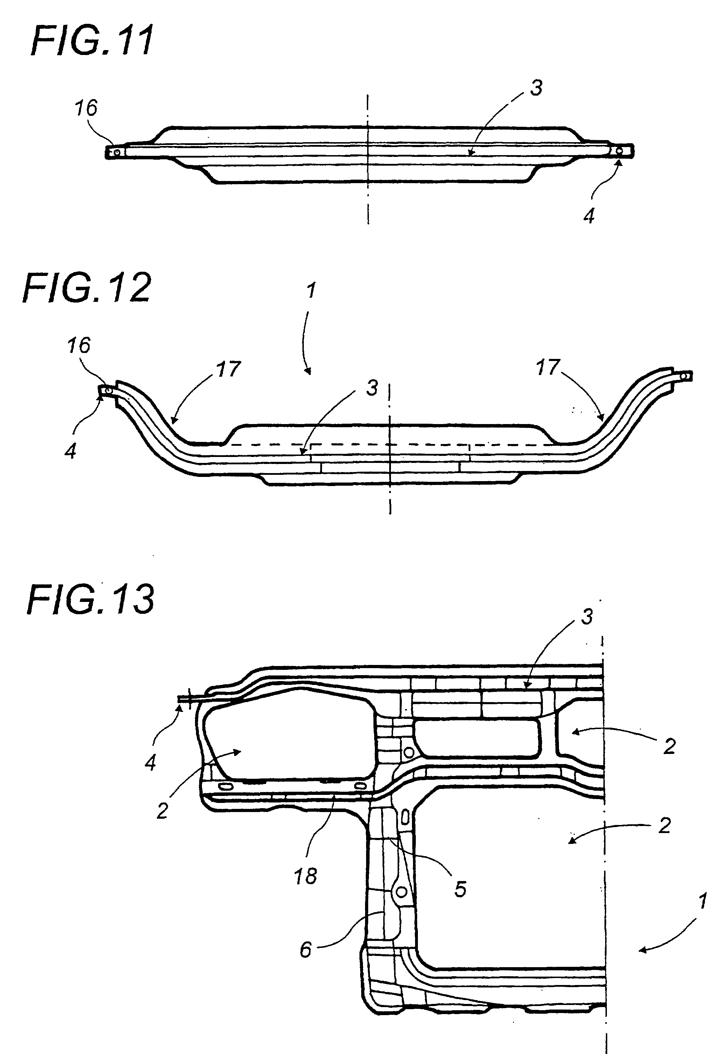

La paroi de face avant de véhicule sous capot moteur 1 peut être adaptée à tout type de véhicules routiers sans sortir du cadre de l'invention, en modifiant sa forme extérieure, le nombre et la forme des ouvertures techniques de passage ou de logements 2 des éléments techniques ou bien la forme de la traverse tubulaire de renfort 3. Deux modes de réalisation de cette traverse sont illustrés par les figures 11 et 12. La traverse métallique tubulaire 3 de la figure 11 est sensiblement rectiligne, alors que les portions d'extrémité 17 de la traverse 3 ont subi un cintrage dans le mode de réalisation de la figure 12.

Dans le cas de parois de face avant de véhicule sous capot moteur 1 de grande taille ou devant supporter un poids important, la rigidité de la pièce peut encore être améliorée par l'ajout selon l'invention d'une ou de plusieurs traverses métalliques tubulaires de renforcement supplémentaires. La figure 13 représente, par exemple, une moitié de paroi 1 de face avant renforcée par deux traverses métalliques 3 et 18, de forme générale tubulaire, sensiblement parallèles. La première traverse 3 est identique à celle de la figure 1. La deuxième traverse 18 s'étend elle aussi sur toute la longueur de la partie supérieure de la paroi de face avant 1, mais est située en bordure inférieure de la barre du T.

Une liaison mécanique peut être réalisée entre les tubes 3 et 18 par l'intermédiaire de l'unité de fermeture et de verrouillage du capot moteur, qui peut être fixée par des vis à chacun des tubes 3 et 18 selon le principe décrit précédemment en se référant à la figure 6. La liaison de ces deux traverses 3 et 18 augmente encore la rigidité de la paroi 1 de face avant.

Tous les avantages du procédé de moulage par injection peuvent être utilisés pour la fabrication des pièces selon l'invention. On peut ainsi, par exemple, intégrer ou insérer de façon simple et aisée, à la paroi de face avant 1 de véhicule sous capot moteur, des éléments fonctionnels supplémentaires. Il peut s'agir par exemple, comme il est représenté sur la figure 14, de support de maintien 19 par exemple de forme générale en « lyre », permettant le maintien de tubes flexibles en caoutchouc, tels que les tubes du circuit de refroidissement, de climatisation, ou de câbles électriques.

## Revendications

1. Ensemble composite de structure pour la cohésion et la rigidification de la zone avant de carrosserie sous capot moteur d'un véhicule automobile, ensemble formé :
- d'un panneau de structure (1) en cadre servant de paroi de face avant d'un véhicule sous capot moteur comportant une ou plusieurs ouvertures techniques (2) de logement ou de passage pour la réception d'organes, de dispositifs ou d'accessoires techniques ou esthétiques ou de blocs optiques ou d'entrée d'air fixés sur ce panneau de structure (1), et
- d'une liaison linéaire de rigidification, transversale au véhicule en liaison mécanique avec la bordure supérieure de ce panneau de structure (1),
la bordure supérieure du panneau de structure (1) en cadre étant double et la liaison de rigidification (3) étant un élément transversal au véhicule de nature composite qui s'étend sur toute la longueur du bord supérieur du panneau de structure (1) formant la paroi de face avant sous capot moteur du véhicule et servant de traverse d'extrémité avant de carrosserie **caractérisé en ce que** l'élément de rigidification (3) est tubulaire et présente une âme tubulaire et sensiblement rectiligne dans une matière et un surmoulage dans une autre matière habillant au moins l'une de ses faces.

2. Ensemble composite selon la revendication 1 **caractérisé en ce que** l'élément linéaire de rigidification (3) est partiellement ou totalement aplati sur au moins une portion de sa longueur.

3. Ensemble composite selon la revendication 1 ou 2 **caractérisé en ce que** le surmoulage est réalisé sur toute la longueur du corps de l'élément de rigidification (3).

4. Ensemble composite selon l'une quelconque des revendications 1 à 3 **caractérisé en ce que** le surmoulage est réalisé sur une ou plusieurs portions localisées du corps de l'élément de rigidification (3).

5. Ensemble composite selon l'une quelconque des revendications précédentes **caractérisé en ce que** le surmoulage est en matière plastique et **en ce que** cette matière enrobe la périphérie d'au moins une des portions du corps de l'élément de rigidification (3) sur laquelle est réalisé le surmoulage.

6. Ensemble composite selon la revendication précédente **caractérisé en ce que** la matière plastique n'est en contact qu'avec une partie de la périphérie d'au moins une des portions du corps de l'élément de rigidification (3) sur laquelle est réalisé le surmoulage.

7. Ensemble composite selon l'une quelconque des revendications précédentes **caractérisé en ce qu'**au moins un trou (10, 14) est percé ou réalisé par crevé dans une partie de l'élément de rigidification (3) n'étant pas en contact avec la matière plastique.

8. Ensemble composite selon la revendication 7 **caractérisé en ce qu'**un écrou (11) est rapporté sur le ou au moins l'un des trous (10) percés ou l'un des crevés dans l'élément de rigidification (3).

9. Ensemble composite selon la revendication 7 **caractérisé en ce qu'**au moins une portion de l'élément de rigidification (3) n'étant pas en contact avec la matière plastique est percée ou crevée selon un ou plusieurs groupes constitués de deux trous (10 et 14) diamétralement opposés et situés en regard l'un de l'autre.

10. Ensemble composite selon l'une quelconque des revendications précédentes **caractérisé en ce qu'**un ou plusieurs segment(s) de tôle (4) est ou sont rapporté(s) sur l'élément de rigidification (3).

11. Ensemble composite selon la revendication 10 **caractérisé en ce que** l'élément de rigidification (3) est prolongé à ses extrémités par les segments de tôle (4) permettant la fixation de l'ensemble composite aux ailes avant du véhicule.

12. Ensemble composite selon l'une quelconque des revendications précédentes **caractérisé en ce que** l'élément de rigidification (3) et/ou le(s) segment(s) de tôle (4) a ou ont subi des déformations afin d'améliorer leur ancrage dans la matière plastique.

13. Ensemble composite selon l'une quelconque des revendications précédentes **caractérisé en ce qu'**un deuxième élément linéaire de rigidification (18) est lié mécaniquement par surmoulage au panneau de structure (1).

14. Ensemble composite selon la revendication 13 **caractérisé en ce que** les deux éléments linéaires de rigidification (3 et 18) sont liés mécaniquement par l'intermédiaire de l'unité de fermeture et de verrouillage du capot moteur du véhicule.

15. Ensemble composite selon l'une quelconque des revendications précédentes **caractérisé en ce que** le panneau de structure (1) comporte des nervures de rigidification, en matière plastique, horizontales (5) et verticales (6), réalisant un caissonnage.

## Patentansprüche

1. Baugruppe zum Zusammenhalten und Versteifen des vorderen Bereichs der Karosserie unter der Motorhaube eines Kraftfahrzeugs, mit:
- einer Rahmenstruktur (1), die als Vorderwand eines Fahrzeugs unter der Motorhaube dient und eine oder mehrere funktionelle Öffnungen (2) als Sitz oder Durchführung für Maschinenteile, Vorrichtungen oder technisches oder ästhetisches Zubehör oder für optische Baugruppen oder Lufteinlässen aufweist, die auf der Rahmenstruktur (1) befestigt sind, und
- einem linearen, quer zum Fahrzeug angeordneten Versteifungselement, das in mechanischer Verbindung mit der Oberkante der Rahmenstruktur (2) steht,
wobei die Rahmenstruktur (1) gedoppelt ist und das Versteifungselement (3) ein querliegendes Element in Verbundbauweise ist, das sich über die gesamte Länge der Oberkante der Rahmenstruktur (1) erstreckt und die Vorderwand unter der Motorhaube bildet und als Querstrebe des vordersten Teils der Karosserie dient, **dadurch gekennzeichnet, dass** das Versteifungselement (3) rohrförmig ist, eine rohrförmige und im Wesentlichen gerade Seele aufweist und zumindest auf einer Seite durch Umspritzen mit einem anderen Material umhüllt ist.

2. Baugruppe nach Anspruch 1, **dadurch gekennzeichnet, dass** das lineare Versteifungselement (3) zumindest über einen Teil seiner Länge teilweise oder völlig abgeplattet ist.

3. Baugruppe nach Anspruch 1 oder 2, **dadurch gekennzeichnet, dass** die Umspritzung über das gesamte Versteifungselement (3) ausgeführt ist.

4. Baugruppe nach einem der Ansprüche 1 bis 3, **dadurch gekennzeichnet, dass** die Umspritzung auf einem oder mehreren begrenzten Teilen des Versteifungselements (3) ausgeführt ist.

5. Baugruppe nach einem der vorhergehenden Ansprüche, **dadurch gekennzeichnet, dass** die Umspritzung mit Kunststoffmaterial ausgeführt ist und dieses Material den Umfang zumindest eines Teils des Versteifungselements (3), auf dem die Umspritzung erfolgt ist, umgibt.

6. Baugruppe nach einem der vorhergehenden Ansprüche, **dadurch gekennzeichnet, dass** das Kunststoffmaterial nur mit einem Teil des Umfangs zumindest eines Teils des Versteifungselements (3), auf dem die Umspritzung erfolgt ist, in Kontakt ist.

7. Baugruppe nach einem der vorhergehenden Ansprüche, **dadurch gekennzeichnet, dass** mindestens eine Bohrung (10, 14) in einen nicht vom Kunststoff umhüllten Teil des Versteifungselements (3) gebohrt oder gestanzt ist.

8. Baugruppe nach Anspruch 7, **dadurch gekennzeichnet, dass** eine Mutter (11) auf zumindest einem der in das Versteifungselement gebohrten oder gestanzten Löcher (10) angebracht wurde.

9. Baugruppe nach Anspruch 7, **dadurch gekennzeichnet, dass** in mindestens einen nicht mit Kunststoff umhüllten Teil des Versteifungselements (3) eine oder mehrere Gruppen von sich diametral einander gegenüberliegenden Löchern (10, 14) gebohrt oder gestanzt sind.

10. Baugruppe nach einem der vorhergehenden Ansprüche, **dadurch gekennzeichnet, dass** ein oder mehrere Blechteil(e) (4) am Versteifungselement (3) befestigt ist bzw. sind.

11. Baugruppe nach Anspruch 10, **dadurch gekennzeichnet, dass** das Versteifungselement (3) an seinen Enden mittels Blechteilen (4) verlängert ist, die es erlauben die Baugruppe an den vorderen Kotflügeln des Fahrzeugs zu befestigen.

12. Baugruppe nach einem der vorhergehenden Ansprüche, **dadurch gekennzeichnet, dass** das Versteifungselement (3) und/oder das/die Blechteil(e) (4) verformt sind, um eine bessere Verankerung im Kunststoff zu erreichen.

13. Baugruppe nach einem der vorhergehenden Ansprüche, **dadurch gekennzeichnet, dass** ein zweites lineares Versteifungselement (18) durch Umspritzen mechanisch mit der Rahmenstruktur (1) verbunden ist.

14. Baugruppe nach Anspruch 13, **dadurch gekennzeichnet, dass** die beiden linearen Versteifungselemente (3, 18) mechanisch mittels einer Schließ- und Verriegelungseinheit der Motorhaube miteinander verbunden sind.

15. Baugruppe nach einem der vorhergehenden Ansprüche, **dadurch gekennzeichnet, dass** die Rahmenstruktur (1) horizontale (5) und vertikale (6) Verstärkungsrippen aus Kunststoff aufweist, die einen Gitterrahmen bilden.

## Claims

1. A structural composite assembly for strengthening and stiffening the front body zone under the engine bonnet of an automotive vehicle, said assembly being formed:
- of a structural framework panel (1) serving as a front face wall of a vehicle under the engine bonnet and comprising one or more technical accommodating or passage openings (2) for receiving technical or aesthetic members, devices or accessories or optical or air inlet units fixed to said structural panel (1), and
- of a linear stiffening link, transverse relative to the vehicle and in mechanical connection with the upper edge of said structural panel (1),
the upper edge of the structural framework panel (1) being double and the stiffening link (3) being an element transverse to the vehicle and of composite nature which extends over the entire length of the upper edge of the structural panel (1) forming the front face wall under the engine bonnet of the vehicle and serving as a body front end crosspiece, **characterised in that** the stiffening element (3) is tubular and has a tubular, substantially rectilinear core of one material and an overmoulding of another material covering at least one of its faces.

2. A composite assembly according to claim 1, **characterised in that** the linear stiffening element (3) is partially or totally flattened over at least one portion of its length.

3. A composite assembly according to claim 1 or claim 2, **characterised in that** the overmoulding is provided over the entire length of the body of the stiffening element (3).

4. A composite assembly according to any one of claims 1 to 3, **characterised in that** the overmoulding is provided over one or more localised portions of the body of the stiffening element (3).

5. A composite assembly according to any one of the preceding claims, **characterised in that** the overmoulding is of plastics material and **in that** said material covers the periphery of at least one of the portions of the body of the stiffening element (3) over which the overmoulding is provided.

6. A composite assembly according to the preceding claim, **characterised in that** the plastics material is only in contact with part of the periphery of at least one of the portions of the body of the stiffening element (3) over which the overmoulding is provided.

7. A composite assembly according to any one of the preceding claims, **characterised in that** at least one hole (10, 14) is pierced or produced by bursting in part of the stiffening element (3) which is not in contact with the plastics material.

8. A composite assembly according to claim 7, **characterised in that** a nut (11) is fitted to the hole or at least one of the pierced or burst holes (10) in the stiffening element (3).

9. A composite assembly according to claim 7, **characterised in that** at least one portion of the stiffening element (3) which is not in contact with the plastics material is pierced or burst with one or more groups consisting of two diametrically opposed holes (10 and 14) facing one another.

10. A composite assembly according to any one of the preceding claims, **characterised in that** one or more segments of sheet metal (4) is or are fitted on the stiffening element (3).

11. A composite assembly according to claim 10, **characterised in that** the stiffening element (3) is extended at its ends by the sheet metal segments (4) allowing the composite assembly to be fixed to the front wings of the vehicle.

12. A composite assembly according to any one of the preceding claims, **characterised in that** the stiffening element (3) and/or the sheet metal segments (4) has/have undergone deformation in order to improve anchoring thereof in the plastics material.

13. A composite assembly according to any one of the preceding claims, **characterised in that** a second linear stiffening element (18) is connected mechanically by overmoulding to the structural panel (1).

14. A composite assembly according to claim 13, **characterised in that** the two linear stiffening elements (3 and 18) are connected mechanically through the intermediary of the closing and locking unit for the engine bonnet of the vehicle.

15. A composite assembly according to any one of the preceding claims, **characterised in that** the structural panel (1) comprises horizontal (5) and vertical (6) stiffening ribs of plastics material forming a casing.
